# EUROPEAN PATENT APPLICATION

(11) **EP 4 632 776 A1**
(43) Date of publication of application: **15.10.2025**
(21) Application number: 22850574.9
(22) Date of filing: 05.12.2022
(51) Int. Cl.: H01G 11/52, H01G 11/02, H01G 11/06, H01G 11/38, H01G 11/50, H01G 11/86, H01M 4/04, H01M 4/139, H01M 4/62, H01M 10/0525, H01M 10/058, H01M 50/46, H01G 11/36, H01G 11/84, H01M 50/417, H01M 50/429, C09D 11/52

(54) **DEVICE FOR STORING AND/OR CONVERTING ENERGY AND METHOD FOR MANUFACTURING SUCH A DEVICE**

(71) Applicant: Graphenano Energy, S.L., 30510 Yecla (Murcia) (ES); Universitat De València, Estudi General, 46010 València (ES)
(72) Inventor: ROMERO PASCUAL, Jorge, 46010 VALENCIA (ES); ABELLÁN SÁEZ, Gonzalo, 46010 VALENCIA (ES); CORONADO MIRALLES, Eugenio, 46010 VALENCIA (ES); SERNA GUIJARRO, Raúl, 46010 VALENCIA (ES); SIMÓN GARCIA, María, 30510 YECLA (Murcia) (ES); MOLERO CAMPOS, Rafael, 30510 YECLA (Murcia) (ES); MARTINEZ ROVIRA, Martín, 30510 YECLA (Murcia) (ES)
(74) Representative: Herrero & Asociados, S.L.
(86) International application number: PCT/ES2022/070779
(87) International publication number: WO 2024/121442

(57) **Abstract**

The device for storing and/or converting energy (1) comprises one or more spacers (2) defining two sides; and electrodes (3) in contact with one or both sides of the spacer (2), each electrode (3) comprising an ink including at least one conductive additive.

The method comprises the following steps: preparing an ink, the ink comprising at least one conductive additive; and forming electrodes (3) with the ink, the electrodes (3) being in contact with one or both sides of one or more spacers (2).

It allows the separator itself to act as a collector at the same time, providing a solution to the problem of oxidation of metal collectors, among others.

## Description

### Object of the invention

The present invention relates to a device for storing and/or converting energy and to a method for manufacturing such a device for storing and/or converting energy.

### Background to the invention

Currently, energy storage devices comprise metallic collectors as the conductive support for their electrodes, since the electrodes do not have enough conductivity to function properly.

One of the biggest problems in energy storage devices are these collectors, since, being the metal part, it is the part that increases its weight the most, thus reducing its energy density.

At the same time, collectors are one of the most expensive parts of a battery, especially nowadays, with the problem of sourcing materials and their geolocation.

The solutions that have been considered so far have been to reduce the thickness of the collector as much as possible in order to reduce weight and price, but metal collectors are still present.

In addition, this partial solution of reducing the thickness and weight of the collectors can generate problems in the manufacturing processes, as when the collectors are so thin they are very fragile and can break on the production line during printing and assembly, with the economic cost of stopping production and bringing the machinery back up to speed after removing the broken part.

### Description of the invention

With the device for storing and/or converting energy and the method of the invention, the aforementioned disadvantages are solved, presenting other advantages that will be described below.

Therefore, an objective of the present invention is to provide a device for storing and/or converting energy and a method for depositing the electrode on the separator, causing the separator itself to act as a collector, and providing a solution to the problem of oxidation of metal collectors, among others.

These objectives are achieved by hybridizing the inks with graphene fibers, which provide the necessary conductivity to the electrode without the use of a metal collector.

The device for storing and/or converting energy and method according to the present invention are described in the respective independent claims, and the dependent claims include additional features that are optional.

It should be noted that in the present description and claims, the term separator refers to any type of material which physically separates one material from another, such as, for example, the cathode and anode in a battery.

It should be noted that in the present description and claims, the term device for storing and/or converting energy refers to any type of device for storing and converting energy, such as, for example, lithium, sodium, potassium batteries, whether ion or solid-state, metal-air, organic, etc., fuel cells, electrolysers, etc.

According to a first aspect, the device for storing and/or converting energy comprises:
- one or more separators defining two sides; and
- electrodes in contact with one or both sides of the separator, each electrode comprising an ink including at least one conductive additive.

Preferably, the conductive additive comprises graphene fibers.

In addition, the ink advantageously also comprises a binder, active materials and solvents.

Preferably, the separator is made of cellulose, plastic, or glass fiber.

According to a second aspect, the method for manufacturing a device for storing and/or converting energy comprises the following steps:
- preparing an ink, the ink comprising at least one conductive additive; and
- forming electrodes with said ink, the electrodes being in contact with one or two sides of one or more spacers.

According to a preferred embodiment, the electrodes are formed by applying the ink directly to the two sides of the separator. In this case, preferably, the ink is first applied to a first side of the separator, it is dried, and once the ink has dried, the ink is applied to a second side of the separator, and it is dried.

According to an alternative embodiment, the electrodes are formed on a support and, once formed, they are placed in contact with the two sides of the separator.

If desired, the method may also comprise a final stage of cutting the assembly of the separator and the two electrodes.

The device for storing and/or converting energy according to the present invention is very versatile, and provides several advantages, such as:
- Higher energy density: by avoiding the use of metallic collectors, the total mass is considerably reduced and, consequently, the energy density per kilogram is improved.
- Decrease of the final price: one of the most expensive parts in devices for storing and/or converting energy are the metallic collectors. As these collectors are no longer needed (at least partially), and as they are replaced by one or more separators that can be made of different materials such as: cellulose (paper), polymers (e.g., polypropylene), fibers (e.g., ceramic, glass, carbon...), the components of the devices are simplified, reducing the cost.
- Collector oxidation/reduction problems are minimized. Both when the electrolyte solvent is organic and, to a greater extent, when using water-based electrolytes - which are much more environmentally friendly and economical - degradation of the collectors can drastically affect the stability of the devices.

All these advantages make the device for storing and/or converting energy and method according to the present invention better and cheaper than current devices for storing and/or converting energy.

### Brief description of the drawings

For a better understanding of what has been explained above, drawings are included in which, schematically and only as a non-limiting example, a practical case of embodiment is shown.
Figure 1 is a diagrammatical sectional view of an energy storage device according to the present invention;
Figure 2 shows a charge-discharge cycle in a LFP versus Li metal half-cell using conventional current collectors (Aluminum) and as electrolyte: LiPF₆ 1 M EC/EMC=50/50 (v/v).
Figure 3 shows a charge-discharge cycle in a semi-cell of LFP versus Li metal using the new method described above on the polypropylene separator and using as electrolyte: LiPF₆ 1 M EC/EMC=50/50 (v/v).
Figure 4 shows a charge-discharge cycle in a graphite versus Li metal half-cell using conventional current collectors (Copper) and as electrolyte: LiPF₆ 1 M EC/EMC=50/50 (v/v).
Figure 5 shows a charge-discharge cycle in a graphite versus Li metal half-cell using the new method described above on the polypropylene separator and using as electrolyte: LiPF₆ 1 M EC/EMC=50/50 (v/v).
Figure 6A shows 10-hour charge and discharge cycles of a lithium-ion button cell using aluminum and copper collectors for the cathode and anode, respectively, with a cellulose separator. Device: stainless steel button cell; cathode: commercial LFP on aluminum collector with conductive carbonaceous materials; anode: commercial synthetic graphite on copper collector with conductive carbonaceous materials; electrolyte: LiPF₆ 1 M EC/EMC=50/50 (v/v).
Figure 6B shows charging and discharging cycles for 10 hours in a lithium-ion button cell using the new method described above on the cellulose separator and using as electrolyte: LiPF₆ 1 M EC/EMC=50/50 (v/v).

### Description of a preferred embodiment

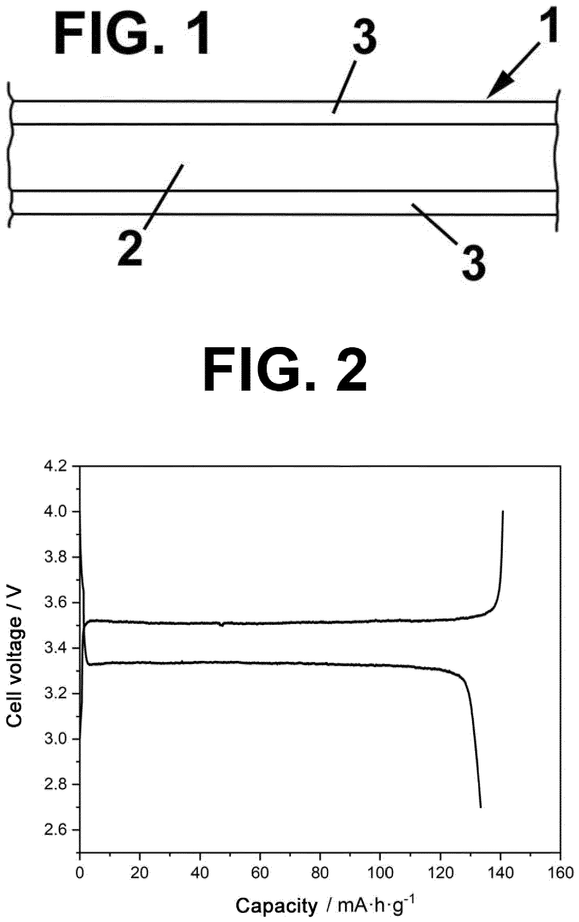

The device for storing and/or converting energy according to the present invention, identified generally by reference number 1, comprises a spacer 2 on which an ink with graphene fibers is applied on its two sides, forming two electrodes 3, as shown schematically in figure 1.

In this way, it is the separator 2 itself that also acts as a collector, providing a solution to the problem of oxidation of metal collectors, among others. Thus, inks with graphene fibers provide the necessary conductivity to electrode 3 without the use of a metal collector.

The separator 2 on which the ink is applied can be any material used in devices for storing and/or converting energy, such as cellulose in capacitors, plastic or glass fiber separators in lithium batteries, metal mesh, etc.

It should be noted that the device shown schematically in figure 1 is only a non-limiting example, as the device according to the present invention can be double spacer, have two spacers printed only on one side, spacers on a support, etc.

The method of manufacture according to the present invention starts with the preparation of the ink which is applied on the separator 2.

This ink is prepared using a binder, solvents, conductive additives and active materials. All existing binders can be used to prepare the ink, the most common being polyvinylidene fluoride (PVDF) and styrene-butadiene rubber (SBR).

The percentage of such binders may change, for example, from 0.1 % to 40 % by total mass of the ink. Solvents that can be used for printing are also any, for example, N-methyl-2-pyrrolidone (NMP), water or alcohols.

Regarding conductive additives, conductive carbonaceous materials are used, either only one or a combination of several, e.g., carbon black, graphene fibers, carbon nanotubes, graphitic carbon, etc. The amount of conductive additives can change from 0.1 % to 40 % by total mass of the ink.

Once the binder has been dissolved in the solvent and the rest of the materials have been added, the ink is homogenized with a special system for this purpose, such as a ball mill, shear mill, vacuum agitator, or similar.

The ink is then applied to one side of the separator 2 to form an electrode 3.

This application can be done with any process, e.g. a doctor blade to apply the ink on the separator 2, but it can also be applied with systems such as lamination, ink jet, etc. Using a doctor blade, the ink can be applied on the cellulose separator 2 and the desired thickness can be achieved.

Once the ink has been applied to one side of the separator 2, it is dried, for example, at a temperature of between 20 and 150°C for the time necessary to remove all the solvent. After the first drying or curing, the ink is applied to the other side of separator 2 and dried in the same way.

It is worth mentioning that it can also be done by applying the ink on a smooth surface, from which the electrode can be removed as a wafer, and is fully functional, without the need for a metal collector.

It is also possible to apply the ink on fabrics as an aid support, but these must be soluble in a solvent, which can be removed during assembly using a corresponding solvent and leaving the electrode without collector and support.

In addition, if desired, the separator and electrode assembly can be cut to a desired shape, e.g. for button cells, by cutting out circles of the desired diameter.

For the demonstration of the device for storing and/or converting energy according to the present invention the following comparative examples are provided in the following description.

For the manufacture of the lithium batteries, a classic LFP (lithium ferrophosphate) battery configuration was used, using LiPF₆ 1 M EC/EMC=50/50 (v/v) as electrolyte and polypropylene or cellulose separator. Commercial LFP was used as the active material for the cathode, together with the conductive additives and the binder. On the other hand, a commercial synthetic graphite was used as the anode, with its respective conductive additives and binder.

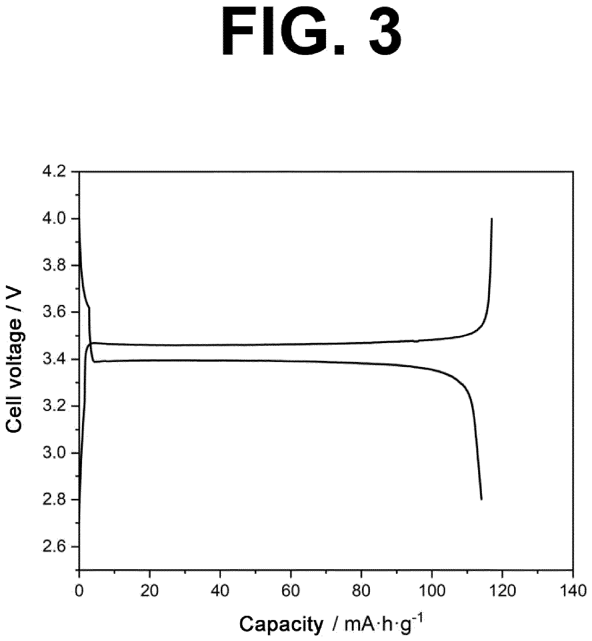

For the tests, the different electrodes were deposited in the classic way, using a copper or aluminum collector as appropriate. Once the electrodes had been deposited, cut and dried, the different button cells were assembled in a glove box with an argon atmosphere in the following configurations. Firstly, a button cell was made with a semi-cell configuration in which a commercial LFP (lithium ferrophosphate) cathode was assembled against lithium metal, using as electrolyte LiPF₆ 1 M EC/EMC=50/50 (v/v) and a polypropylene separator (Figure 2). The same configuration is shown below, but without using metal collectors, using the technology that has been developed (Figure 3).

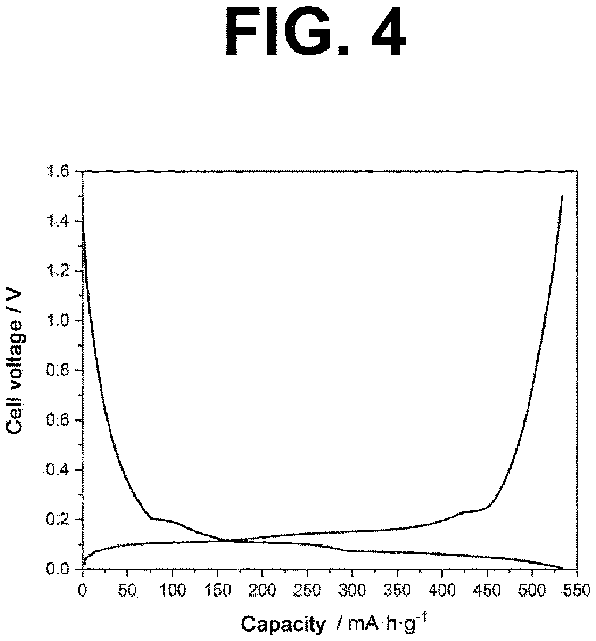

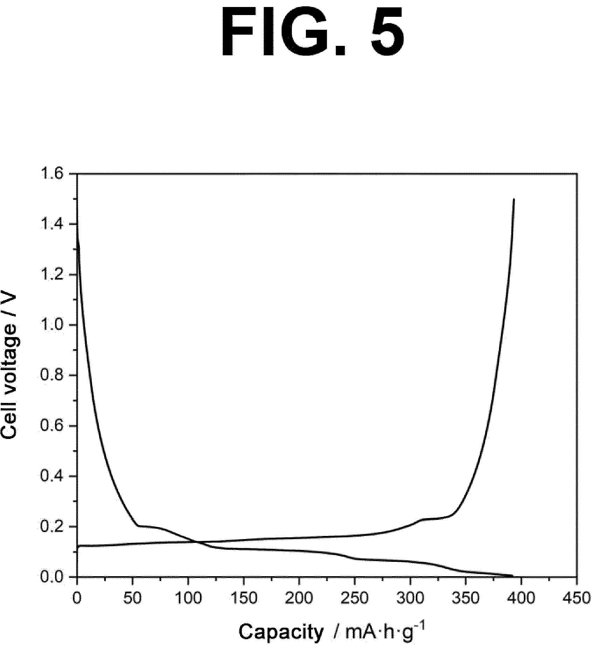

Secondly, a button cell with a semi-cell configuration was made in which a commercial graphite vs. lithium metal anode was assembled, using LiPF₆ 1 M EC/EMC=50/50 (v/v) and a polypropylene separator as electrolyte (Figure 4). The same configuration is shown below, but without using metal collectors, using the technology that has been developed (Figure 5).

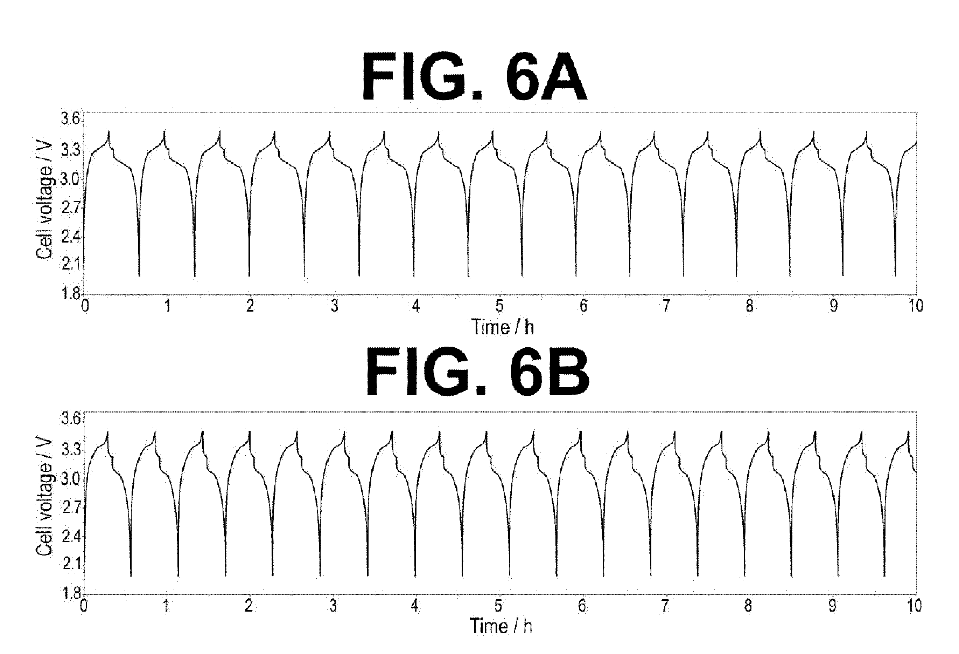

Finally, figure 6A shows several charge and discharge cycles in a lithium-ion button cell assembled using aluminum and copper collectors for the cathode (LFP) and anode (graphite), respectively. LiPF₆ 1 M EC/EMC=50/50 (v/v) was used as electrolyte and cellulose was used as separator.

Figure 6B shows several charge and discharge cycles in a lithium-ion button cell assembled with the same materials for cathode and anode, the same electrolyte, but using the newly developed method on the cellulose separator. As can be seen in Figure 6B, the newly developed technology can be employed on both polymeric separators (e.g. polypropylene) and cellulose separators showing adequate behavior. Of course, these results can be improved by using other materials as separators.

Although reference has been made to a specific embodiment of the invention, it is obvious to a person skilled in the art that the method and device described are susceptible to numerous variations and modifications, and that all the details mentioned can be replaced by technically equivalent ones, without departing from the scope of protection defined by the appended claims.

## Claims

1. Device for storing and/or converting energy (1), **characterized in that** it comprises:
- one or more spacers (2) defining two sides; and
- electrodes (3) in contact with one or both sides of the separator (2), each electrode (3) comprising an ink including at least one conductive additive.

2. Device for storing and/or converting energy (1) according to claim 1, wherein the conductive additive comprises one or more forms of carbon, such as graphene fibers.

3. Device for storing and/or converting energy (1) according to claim 1, wherein the ink also comprises a binder, active materials, and solvents.

4. Device for storing and/or converting energy (1) according to claim 1, wherein the separator (2) is made of cellulose, polymeric, glass fiber or ceramic or combination thereof.

5. Method for manufacturing a device for storing and/or converting energy (1), **characterized in that** it comprises the following steps:
- preparing an ink, the ink comprising at least one conductive additive; and
- forming electrodes (3) with said ink, the electrodes (3) being in contact with one or two sides of one or more spacers (2).

6. Method for manufacturing a device for storing and/or converting energy (1) according to claim 5, wherein the electrodes (3) are formed by applying the ink directly to one or both sides of the spacer (2).

7. Method for manufacturing a device for storing and/or converting energy (1) according to claim 5, wherein the electrodes (3) are formed on a support and, once formed, are placed in contact with the two sides of the spacer (2).

8. Method for manufacturing a device for storing and/or converting energy (1) according to any one of claims 5 to 7, further comprising a final step of cutting the separator assembly (2) and the two electrodes (3).

9. Method for manufacturing a device for storing and/or converting energy (1) according to claim 6, wherein ink is first applied to a first side of the separator (2), it is dried, and once the ink has dried, the ink is applied to a second side of the separator (2), and it is dried.
